# EUROPEAN PATENT APPLICATION

(11) **EP 2 234 375 A1**
(43) Date of publication of application: **29.09.2010**
(21) Application number: 09305255.3
(22) Date of filing: 24.03.2009
(51) Int. Cl.: H04L 29/08

(54) **device and method for controlling dissemination of content data between peers in a P2P mode, by using a two-level randomized peer overlay and a dynamic unchoke mechanism**

(71) Applicant: Thomson Licensing, 92130 Issy-les-Moulineaux (FR)
(72) Inventor: Picconi, Fabio, 75006, Paris (FR); Varvello, Matteo, 92100, Boulogne Billancourt (FR); Massoulie, Laurent, 92420, VAUCRESSON (FR)
(74) Representative: Berthier, Karine

(57) **Abstract**

A method is intended for controlling dissemination of content data in a peer-to-peer mode between peers (P1-P16) connected to different communication networks (N1-N3). This method comprises the steps of: i) building, for each peer, a first peer set comprising active peers that are primary connected neighbours close to this peer in terms of network cost and a second peer set comprising active peers that are secondary connected neighbours of this peer, chosen at random irrespectively of network cost, and ii) dynamically determining into each peer a capacity of content data it is ready to receive from peers of the second peer set, taking into account its current capacity to receive content data from peers of the first peer set, in order to optimize the peer-to-peer dissemination of the content data.

## Description

### Technical field

The present invention relates to content dissemination between peers in a peer-to-peer (or "P2P") environment (or network).

One means here by "peer" a user communication equipment capable of exchanging data (or symbols) with other peers or network equipments in a P2P mode, because it comprises at least one executable P2P communication application. So, a peer may be a fixed personal computer, a laptop, a content receiver (for instance a home gateway or a set-top box (STB) located in the user's home premise), a mobile or cellular telephone, a fixed telephone, or a personal digital assistant (PDA), provided that it comprises a communication modem (or any equivalent communication means).

Moreover, one means here by "symbol" a block or packet or chunk of data.

More, one means here by "content dissemination" the transmission of content data between peers connected to different (communication) networks (or domains) in order each of these peers had these contents at its disposal.

### Background of the invention

As it is known by the man skilled in the art, P2P has been widely welcome by end-users (or clients of Internet Service Providers (or ISPs)) notably for file sharing or video streaming or else Video on Demand (or VoD), but it has also become a headache for the ISPs. This mainly results from the fact that current P2P algorithms are network-agnostic, i.e. they construct an overlay without any knowledge of the underlying network topology, and therefore peers often exchange data with users connected to different ISPs, which does not favor the exchanges between users connected to a local ISP. This behavior produces large amounts of unnecessary inter-domain (or inter network) traffic, generating a high financial cost for ISPs.

One means here by "overlay" the set of connections which are established between all the peers of a P2P network (or environment).

A solution to this issue consists in biasing overlay neighbor selection using the information obtained from an ISP-aware service. This leads to clustered overlays which closely follow the underlying physical topology. As a consequence, inter-domain traffic is significantly reduced, lowering the financial burden for ISPs and freeing up wide-area bandwidth for end-users. However, this solution has only been evaluated with bulk-transfer applications whose traffic is elastic and thus can be manipulated rather easily. Conversely, streaming applications must ensure a minimum sustained rate, and, more importantly, must deliver packets to all receivers within a short delay. Thus, any streaming traffic optimizations must also ensure that the quality of service (or QoS) is not impacted.

### Summary of the invention

So the object of this invention is to reduce inter-ISP (or inter-network) traffic in P2P applications, and notably, but not exclusively, in (live) streaming applications.

For this purpose, the invention provides a method, intended for controlling dissemination of content data in a peer-to-peer mode between peers connected to different communication networks (or domains), and comprising the steps of:
i) building, for each peer, a first peer set comprising active peers that are primary connected neighbours close to this peer in terms of network cost and a second peer set comprising active peers that are secondary connected neighbours of this peer, chosen at random irrespectively of network cost, and
ii) dynamically determining into each peer a capacity of content data it is ready to receive from peers of the second peer set taking into account its current capacity to receive content data from peers of the first peer set, in order to optimize the peer-to-peer dissemination of the content data.

Thus, a first (respectively second) overlay is comprised of the connections established between all the peers and their first (respectively second) peer set neighbours.

The control method according to the invention may include additional characteristics considered separately or combined, and notably:
- in step i) one may build the first peer set from peers belonging to the same communication network;
- in step i) one may define a first constraint consisting in authorizing each peer to have a number of incoming peer connections equal to a first chosen value and a number of outgoing peer connections equal to or smaller than a second chosen value, and a second constraint consisting in minimizing the sum of network costs of all primary connected neighbouring peers, then one may let the peers in the first peer set be randomly uniformly distributed under these first and second constraints;
- in step i) one may define a first constraint consisting in authorizing each peer to have a number of incoming peer connections equal to a first chosen value and a number of outgoing peer connections equal to or smaller than a second chosen value, then one may let the peers in the second peer set be randomly uniformly distributed under the first constraint;
- each peer may receive a list of active peers from a communication equipment. In this case, this list may comprise a first sub-list containing active peers that are close to the considered peer in terms of network cost and a second sub-list containing active peers that are chosen at random irrespectively of network cost;
- each peer may periodically contact a peer from the list in order to determine if a primary connection or secondary connection can be established with it;
- in a variant each peer may exchange neighboring information with other peers in order to build a list of active peers comprising a first sub-list containing active peers that are close to it in terms of network cost and a second sub-list containing active peers that are chosen at random irrespectively of network cost.

The invention also provides a device, intended for controlling dissemination by a chosen peer, connected to a communication network (or domain), of content data, in a peer-to-peer mode, to other peers, connected to this communication network or to at least one other communication network (or domain), and arranged for dynamically determining into this chosen peer the capacity of content data it is ready to receive from other peers of a second peer set comprising active peers that are secondary connected neighbours of this chosen peer, chosen at random irrespectively of network cost, taking into account the current capacity of this chosen peer to receive content data from peers of a first peer set comprising active peers that are primary connected neighbours of this chosen peer, closed in terms of network cost, in order to optimize the peer-to-peer dissemination of the content data.

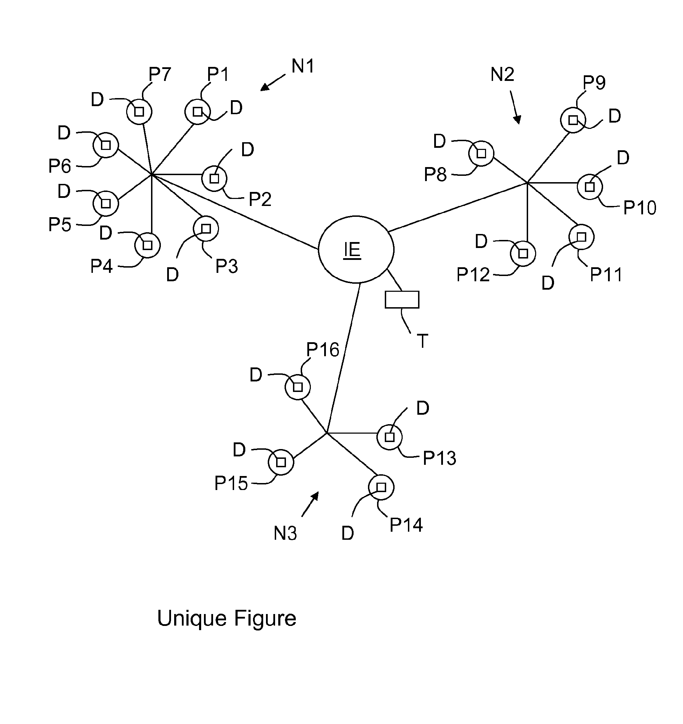

### Brief description of the figure

Other features and advantages of the invention will become apparent on examining the detailed specifications hereafter and the appended drawing, wherein the unique figure schematically illustrates three communication networks (or domains) interconnected therebetween and each comprising peers equipped with a device according to the invention.

### Detailed description of the preferred embodiment

The appended drawing may serve not only to complete the invention, but also to contribute to its definition, if need be.

The invention aims at offering a control method, and an associated control device (D), intended for allowing dissemination of content data in a peer-to-peer (P2P) mode between peers (Pj) connected to different (at least two) communication networks or domains (Ni).

In the following description it will be considered that the communication networks (or domains) (Ni) are wired (or fixed) networks, such as a DSL networks or optical fiber networks or else cable networks. But the invention is not limited to this type of communication network (or domain). Indeed, a communication network may be also a wireless communication network, such as a mobile or cellular or else radio communication network.

Moreover, in the following description it will be considered that peers (Pj) are user communication equipments, such as fixed personal computers. But the invention is not limited to this type of communication equipment. Indeed, the invention concerns any type of communication equipment comprising at least one executable P2P communication application and capable of exchanging data (or symbols) with other communication equipments (or peers) or network equipments in a P2P mode. So, a peer may be also a laptop, a content receiver (for instance a home gateway or a set-top box (STB) located in the user's home premise), a mobile or cellular telephone, a fixed telephone, or a personal digital assistant (PDA), provided that it comprises a communication modem (or any equivalent communication means).

More, in the following description it will be considered that the contents to be disseminated are video. But the invention is not limited to this type of content. Indeed, the invention concerns any type of content which can be disseminated in a P2P mode, and notably files of information data, television programs, radio programs and software updates.

Furthermore, in the following description it will be considered that the video are disseminated by means of a video streaming application. But the video could be also disseminated by means of a video on demand (VoD) application.

It is important to note that applications differing from the live video streaming may require small adaptations of the overlay building and unchoke mechanism which are within reach of the man skilled in the art.

As it is schematically illustrated in the unique figure, the invention concerns a group of active peers Pj (here j = 1 to 16) which are connected therebetween through different (at least two) communication networks (or domains) Ni connected therebetween through interconnecting equipments IE and belonging to (or used by) different internet service providers (or ISPs). In this non limiting example three (communication) networks Ni (i = 1 to 3) are connected therebetween. But the number of interconnected networks Ni may be smaller than three (i.e. equal to two) or greater than three.

Moreover, in this non limiting example the first network N1 comprises seven active peers (P1-P7), the second network N2 comprises five active peers (P8-P12) and the third network N3 comprises four active peers (P13-P16). But each network (or domain) Ni only needs to comprise at least one active peer Pj.

The invention proposes a method intended for controlling dissemination of content data in a peer-to-peer (P2P) mode between peers Pj. This control method comprises two main steps and can be implemented by control devices D according to the invention which are associated respectively to the peers Pj.

One means here by "associated" the fact that a control device D equips a peer Pj (as illustrated in the unique figure). But in a variant it could also mean coupled (for instance connected) to a peer Pj.

A first main step (i) of the method according to the invention consists in building first and second peer sets for each peer Pj.

It is important to note that the connections between a peer Pj and its first and second peer set neighbours are two sub-sets of the ("main") overlay of the interconnected communication networks (or domains) Ni, which are dedicated to this peer Pj.

In order to implement this first main step (i) the network costs between any pair of active peers is supposed to be known by the peers Pj themselves. For instance peers Pj may be informed of these network costs (between any pair of peer IP addresses) by at least one ISP-managed server connected to one network Ni, as described in the document of V. Aggarwal et al, "Can ISPs and P2P systems cooperate for improved performance?", ACM CCR, July 2007, or in the document of H. Xie et al, "P4P: Provider Portal for Applications", Proceedings of SIGCOMM, 2008. But in a variant, the network costs could be estimated in a distributed manner by reverse-engineering the network topology, as described in the document of R. Oliveira et al, "In Search of the elusive Ground Truth: The Internet's AS-level Connectivity Structure", Proceedings of SIGMETRICS, 2008, or in the document of X. Dimitropoulos et al, "AS relationships: Inference and validation", ACM SIGCOMM Computer Communication Review (CCR06), 37(1):2940, January 2007.

The first peer set of a peer Pj comprises active peers Pj' which are primary connected neighbours, i.e. peers that are close to this peer Pj in terms of network cost.

One means here by "peers closed in terms of network cost" peers Pj which may exchange content data at low or reduced network costs. So, it may concern peers Pj connected to the same network or domain Ni, or geographically closed, or else connected to different networks or domains having peering relations defined by low cost bilateral billing agreements.

For instance, a first peer set may be built from peers Pj belonging to the same network or domain Ni. But this is not mandatory.

The peers belonging to the first peer set may be randomly and uniformly distributed all over the peers Pj under first and second constraints such as the ones described hereafter.

For instance, the first constraint may consist in authorizing each peer Pj to have a number of incoming peer connections (or edges) equal to a first chosen value and a number of outgoing peer connections equal to or smaller than a second chosen value.

For instance, the first chosen value is defined by d_{i,max} = r/ce, where r is the content data stream rate and ce is a system-wide nominal edge capacity, and the second chosen value is defined by d_{0, max} = C/ce, where C is the peer's upload capacity.

For instance, the second constraint may consist in minimizing the sum of network costs of all primary connected neighbouring peers.

The second peer set of a peer Pj comprises active peers Pj' which are secondary connected neighbours, chosen at random irrespectively of network cost.

One means here by "secondary connected neighbours" peers Pj' which may exchange content data at network costs which are higher than the low or reduced network costs of connections between peers Pj belonging to the first overlay (which is comprised of the connections established between all the peers and their first peer set neighbours). So, it may concern peers Pj' connected to the same network or domain Ni but difficult to interconnect, or geographically faraway, or else connected to different networks or domains having no peering relations.

The peers belonging to the second peer set may be randomly and uniformly distributed all over the peers Pj under one constraint such as the first one described above.

So, according to the invention in step (i) one produces a highly clustered primary overlay (comprising clusters (or groups) of topologically-close peers), augmented by a large number of secondary inter-cluster links (or inter-groups links), i.e. links between peers located in distant points of the networks or domains Ni. This combination of randomization and localization enables to leverage low cost connections, while ensuring required connectivity properties.

To build such a randomized overlay in a distributed manner, one may use an adaptation of the Metropolis algorithm (described in the document of N. Metropolis et al, "Equations of State Calculations by Fast Computing Machines", Journal of Chemical Physics, 21(6): 1087-1092, 1953). This adaptation consists in scheduling each peer Pj, and more precisely its associated device D, in order it periodically offers to create a connection (or edge) towards a randomly selected peer Pj', and, when the latter (Pj') accepts, in order it eventually drops an existing incoming connection (or edge), with some probability that depends on whether the network cost is lowered by this connection (or edge) replacement. In addition, each peer Pj, and more precisely its associated device D, may periodically drop an existing edge associated with a small probability of destruction. One can show that, for suitable probabilities of transitions, this mechanism converges to the desired randomized overlay.

One may also use a variant of the adaptation described above, to avoid excessively long convergence times and to allow joining peers to create connections (or edges) quickly in order to minimize video start-up time. In this variant each peer Pj may obtain a list of the other active peers Pj', Pj" from a communication equipment T (for instance an ISP aware tracker). This list is representative of the main overlay of the interconnected networks Ni. For large overlays, the list which is transmitted to a peer Pj may contain a first sub-list comprising active peers Pj' that are close to this peer Pj in terms of network cost and a second sub-list containing active peers Pj" that are chosen at random irrespectively of network cost. The lists being randomized, successive tracker queries may return different peer lists to the same peer Pj. In a variant each peer Pj may exchange neighbouring information with other peers Pj' in order to build its list of active peers (comprising the first and second sub-lists). This exchange may be carried out by the peers Pj by means of a gossip-based peer sampling protocol, for instance.

Then the peer Pj, and more precisely its associated device D, may contact periodically a peer Pj' from the list it has received to evaluate whether a new primary or secondary connection (or edge) can be established. A primary connection is a connection established between two peers belonging to the first sub-list, and a secondary connection is a connection established between a peer belonging to the first sub-list and a peer belonging to the second sub-list. For instance, the peer Pj, and more precisely its associated device D, directs half of its connection attempts to peers Pj' from the second sub-list (or random peer list) and half of its connection attempts to peers Pj" from the first sub-list, thus ensuring that candidates for primary and secondary edges are contacted. After a handshake phase, both peers, and more precisely their associated devices D, agree on whether to create an edge therebetween or not, or eventually on dropping an existing edge.

A second main step (ii) of the method according to the invention, hereafter called "dynamic unchoke mechanism", is intended for adapting the bandwidth of inter-cluster links to ensure that chunks (or symbols) are diffused globally with minimal inter-ISP traffic. It consists in dynamically determining into each peer Pj a capacity of content data that it is ready to receive from peers Pj" of the second peer set, while taking into account its current capacity to receive content data from peers Pj' of the first peer set, in order to optimize the peer-to-peer dissemination of the content data.

This dynamic unchoke mechanism has two goals. First, it attempts to keep secondary edge traffic as low as possible, in order to approximate an optimal network cost diffusion. Second, it quickly unchokes secondary edges when a peer Pj approaches a state of chunk starvation, in order to minimize the probability of a deadline miss.

This dynamic unchoke mechanism requires peers Pj to know their upload capacity in order to determine the maximum number of outgoing connections they are able to establish. It is possible to set the peer's emulated capacity in its configuration file. This corresponds to the common practice of letting peer-to-peer users specify an upload limit in their client's configuration. An alternative consists in using bandwidth estimation techniques to assess dynamically the available bandwidth, as described in the document of V. Ribeiro et al, "pathChirp: Efficient Available Bandwidth Estimation for Network Paths", Passive and Active Measurement Workshop, 2003.

For instance, each peer Pj, and more precisely its associated device D, adapts its secondary receive rate (or capacity of content data that it is ready to receive from peers Pj" of the second peer set) according to the presence or absence of events that suggest it is heading towards chunk starvation. One refers hereafter to such events as early starvation signals (or ESS). Whenever an ESS occurs or is generated, the peer Pj, and more precisely its associated device D, increases its secondary receive rate. Conversely, if no ESS is observed during a chosen time interval, the peer Pj, and more precisely its associated device D, decreases its secondary receive rate. This produces quick secondary unchokes, but slower conservative chokes.

A peer Pj, and more precisely its associated device D, may generate an ESS whenever a chunk has not been received half-way to the deadline. For instance, when using a 20-second download buffer, a chunk that has not been received 10-seconds before the deadline may trigger an ESS. Thus, one may call this event a mid-buffer miss. The rationale is that the peer Pj still has another 10-seconds to unchoke secondary sources and download chunks from them.

The advantage of using a mid-buffer miss as ESS is its simplicity. The disadvantage is that the download buffer length, which determines the video lag with respect to the video source, must be sufficiently large to deliver all chunks before the mid-buffer position. This allows to increase the video lag compared to an ISP-agnostic system. However, this lag increase could be reduced by employing more sophisticated ESS mechanisms, such as detecting an increase in the delay distribution of all received chunks.

A control device D is preferably made of software modules, at least partly. But it could be also made of electronic circuit(s) or hardware modules, or a combination of hardware and software modules (in this case the control device D comprises also a software interface allowing interworking between the hardware and software modules). In case where it is exclusively made of software modules it can be stored in a memory of a peer Pj or in any computer software product.

The invention is not limited to the embodiments of control method, control device and peer described above, only as examples, but it encompasses all alternative embodiments which may be considered by one skilled in the art within the scope of the claims hereafter.

## Claims

1. Method for controlling dissemination of content data in a peer-to-peer mode between peers (Pj) connected to different communication networks (Ni), **characterized in that** it comprises the steps of: i) building, for each peer (Pj), a first peer set comprising active peers (Pj') that are primary connected neighbours close to this peer (Pj) in terms of network cost and a second peer set comprising active peers (Pj") that are secondary connected neighbours of this peer (Pj), chosen at random irrespectively of network cost, and ii) dynamically determining into each peer (Pj) a capacity of content data it is ready to receive from peers (Pj") of said second peer set taking into account its current capacity to receive content data from peers (Pj') of said first peer set, in order to optimize the peer-to-peer dissemination of said content data.

2. Method according to claim 1, **characterized in that** in step i) one builds said first peer set from peers belonging to the same communication network (Ni).

3. Method according to one of claims 1 and 2, **characterized in that** in step i) one defines a first constraint consisting in authorizing each peer (Pj) to have a number of incoming peer connections equal to a first chosen value and a number of outgoing peer connections equal to or smaller than a second chosen value, and a second constraint consisting in minimizing the sum of network costs of all primary connected neighbouring peers, then one lets the peers in said first peer set be randomly uniformly distributed under said first and second constraints.

4. Method according to one of claims 1 to 3, **characterized in that** in step i) one defines a first constraint consisting in authorizing each peer (Pj) to have a number of incoming peer connections equal to a first chosen value and a number of outgoing peer connections equal to or smaller than a second chosen value, then one lets the peers in said second peer set be randomly uniformly distributed under said first constraint.

5. Method according to one of claims 1 to 4, **characterized in that** each peer (Pj) receives a list of active peers (Pj', Pj") from a communication equipment (T), said list comprising a first sub-list containing active peers (Pj') that are close to said considered peer (Pj) in terms of network cost and a second sub-list containing active peers (Pj") that are chosen at random irrespectively of network cost.

6. Method according to claim 5, **characterized in that** each peer (Pj) periodically contacts a peer (Pj', Pj") from said list in order to determine if a primary connection or secondary connection can be established with it.

7. Method according to one of claims 1 to 4, **characterized in that** each peer (Pj) exchanges neighbouring information with other peers (Pj', Pj") in order to build a list of active peers comprising a first sub-list containing active peers that are close to it in terms of network cost and a second sub-list containing active peers (Pj") that are chosen at random irrespectively of network cost.

8. Device (D) for controlling dissemination of content data in a peer-to-peer mode from a peer (Pj), connected to a communication network (Ni), to other peers (Pj', Pj") connected to said communication network (Ni) or to at least one other communication network (Ni'), **characterized in that** it is arranged for dynamically determining into said peer (Pj) a capacity of content data it is ready to receive from peers (Pj') of a second peer set comprising active peers (Pj") that are secondary connected neighbours of said peer (Pj), chosen at random irrespectively of network cost, taking into account a current capacity of said peer (Pj) to receive content data from peers (Pj') of a first peer set comprising active peers (Pj') that are primary connected neighbours of said peer (Pj), closed in terms of network cost, in order to optimize the peer-to-peer dissemination of said content data.
